# EUROPEAN PATENT APPLICATION

(11) **EP 1 992 400 A1**
(43) Date of publication of application: **19.11.2008**
(21) Application number: 07108483.4
(22) Date of filing: 18.05.2007
(51) Int. Cl.: B01D 69/06, B01D 69/10, B01D 67/00, B01D 65/00

(54) **Membrane bag and method of producing same**

(71) Applicant: Vlaamse Instelling voor Technologisch Onderzoek (VITO), 2400 Mol (BE)
(72) Inventor: Doyen, Wim, B-2160, Wommelgem (BE); Adriansens, Walter, B-2400, Mol (BE); Molenbergsh, Bart, B-2400, Mol (BE)
(74) Representative: Van Malderen, Joëlle

(57) **Abstract**

The present invention is related to a method of manufacturing a membrane bag, comprising the steps of: (i) providing a spacer fabric with a first (11) and a second (12) layer of fabric spaced apart and tied together by monofilament thread (15) and comprising first regions (42) and second regions (41) in which the fabric has a larger meshes than in the first regions, and wherein each of the first regions are delimited fully around by the second regions, (ii) coating the first and the second layer with a membrane dope (43) wherein, in the first regions, the dope at least partially embeds the first and the second layer and leaves a space (23) between the first layer and the second layer free from membrane dope and the dope fills the spacer fabric in the second regions (41,44) and (iii) forming the membrane. A membrane bag comprises a volume for permeate collection, and is characterised in that said volume is completely enclosed in membrane substance.

## Description

### Field of the Invention

The present invention is related to integrated permeate channel membranes and filtration elements also known as membrane pockets or cartridges. The present invention is equally related to methods of manufacturing such membranes and filtration elements.

### State of the Art

A frameless membrane cartridge is known from WO 2006/056159. The membrane layers are coated on the outside faces of a reinforcing structure of at least two spaced apart drainage layers which are pressed together at the edges. The attachment of the membrane layer to the reinforcing structure is however poor resulting in low backflush pressures that can be used.

Integrated permeate channel membranes (referred to as IPC membranes), in which the membrane is strongly linked to the reinforcing structure, are known from patent application WO 2006/015461. The IPC membranes comprise a permeate channel interposed between two membrane surfaces which form an integral and unitary structure. This is achieved by using a 3D spacer fabric having two fabric surfaces which are spaced apart by monofilament thread at a predefined distance. The membrane layers are directly coated onto the fabric surfaces and partially impregnate said surface, such that also loops of the monofilament thread running through the fabric surface are embedded in the membrane layer. By so doing, a structure is obtained having two membrane surfaces which are spaced apart. The IPC membrane is sufficiently stiff and has a high bonding strength to allow backflush operations at relatively high pressures.

Such IPC membranes may find their application in so-called membrane pockets or cartridges, such as disclosed in the abovementioned patent application. The membrane cartridges comprise a permeate channel interposed between two membrane surfaces. The permeate channel is sealed all around the edge of the cartridge and a drainage pipe is provided for extracting the permeate from the permeate channel. Membrane cartridges are used e.g. in membrane bioreactors for cleaning process or waste water streams.

The use of IPC membranes in membrane cartridges allows to reduce the total components of the cartridge, which eases its manufacturing and reduces manufacturing costs. Moreover, IPC membrane cartridges have a higher resistance to backflush pressures, hence increasing their efficiency. However, the manufacturing of IPC membranes is cumbersome and includes a number of manual interventions.

An IPC membrane is manufactured departing from a 3D spacer fabric. The fabric is coated at both sides with membrane dope in a coating apparatus. Thereafter, the dope is made to coagulate by removing the solvent. Coagulation can be performed by a phase inversion process, in which the solvent of the membrane dope is extracted from the dope by a non-solvent of the membrane polymer. The phase inversion can be performed in liquid (e.g. water) or in an ambient comprising a vapour of said non-solvent. Membrane formation may also be obtained by evaporation of the solvent (dry phase inversion). The phase inversion process is initiated from the outside.

The membranes usually have an asymmetric pore size distribution, in which the smallest pores are present at the feed side. Large particles hence can not penetrate the membrane layer and the membrane is easy to clean, e.g. by applying a backflush. Otherwise, particles would penetrate the membrane and obstruct the pores inside the membrane layer.

The pore size distribution is tailored during the coagulation step and the inner and outer surfaces at both sides of the IPC membrane should not be exposed to the coagulating agent to the same extent. For an IPC membrane, this means that the edges of the with membrane dope coated 3D spacer fabric must be sealed prior to the coagulating step, in order to avoid that the coagulating agent penetrates in the permeate channel. In the art, this is done in a separate step prior to coating the membrane and includes labour-intensive (manual) interventions, which make the IPC membrane manufacturing process cumbersome. Hence, a simpler and cost-efficient manufacturing method is needed for IPC membranes.

### Aims of the Invention

The present invention aims to provide at least an alternative and particularly an improved method of manufacturing an integrated permeate channel membrane, thereby obviating the drawbacks of methods of the prior art.

It is an object of the present invention to reduce the manufacturing costs of IPC membranes. It is also an object of the invention to reduce the complexity of IPC membrane manufacturing and make full automation of said manufacturing possible.

The present invention also aims to provide a membrane bag, comprising an integrated permeate channel, which is adapted to be used as such, as a filtration element. Disadvantages, related to lamination or sealing of the membrane cartridges of the prior art are obviated.

### Summary of the Invention

The aims of the invention are achieved by providing a method of manufacturing and a membrane bag as set out in the appended claims. Therefore, according to a first aspect of the present invention, there is provided a method of manufacturing a membrane bag. The method comprises the steps of:
- providing a spacer fabric comprising a first and a second layer of fabric, wherein the first and the second layers are spaced apart and tied together at a predefined distance by monofilament thread and wherein the spacer fabric comprises one or more first regions in which the fabric of the first layer and the fabric of the second layer have a first structure, and one or more second regions in which the fabric of the first layer and the fabric of the second layer have a second structure having larger meshes than the first structure, and wherein each of said one or more first regions are delimited fully around by the one or more second regions,
- coating the first and the second layer with a membrane dope wherein, in the one or more first regions, the dope embeds at a multitude of points portions of the first and the second layer and leaves a space between the first layer and the second layer substantially free from membrane dope and wherein, in the one or more second regions, the dope fills the spacer fabric and
- forming the membrane.

For the purpose of explaining the invention, the term mesh is defined as every kind of open space enclosed in a network structure or fabric. The term mesh may thus also refer to a hole or an opening within said network or fabric.

Preferably, the spacer fabric comprises a repetitive pattern of first regions. One second region preferably contours each of the first regions. The second region preferably extends in the form of a network in between the first regions.

Preferably, the step of providing a spacer fabric comprises inserting a tube in the spacer fabric in between a first region and a second region.

Preferably, the second structure comprises meshes having a size in the range between 1 and 10 mm.

Preferably, the method further comprises the step of cutting the spacer fabric in and along the second region.

According to a second aspect of the invention, there is provided a membrane bag, comprising a volume for permeate collection, characterised in that said volume is completely enclosed in membrane substance.

Preferably, the membrane substance is seamless. The membrane substance is not laminated or adhered as separate sheets on each other. The membrane bag does not comprise seams (such as from adhesive, lamination, etc.). The membrane substance is preferably porous all over and in every direction.

Preferably, the faces of the membrane bag are planar.

Preferably, the membrane bag comprises a spacer fabric, the spacer fabric comprising a first and a second layer of fabric, wherein:
- the first and the second layers are spaced apart and tied together at a predefined distance by monofilament thread,
- said first and second layers are coated with said membrane substance,
- the volume for permeate collection is interposed between said first and second layers, and
- membrane substance fills the spacer fabric along the border of the membrane bag.

More preferably, at a multitude of points in the region of the volume for permeate collection, portions of the fabrics of the first and the second layer are embedded in membrane substance. Preferably, the fabrics of the first and the second layer comprise meshes which are filled or closed by membrane substance. Preferably, said membrane substance embeds portions of said monofilament thread.

Preferably, the membrane bag comprises a tube for extracting permeate from said volume.

The membrane bag of the invention may be used for the filtration or separation of a mixture of fluids, vapours and particles.

### Brief Description of the Drawings

Figure 1 represents a spacer fabric having a first and a second layer which are spaced apart by monofilament threads. The spacer fabric comprises first regions, delimited by second regions.

Figure 2 represents a cross section of the spacer fabric of figure 1 coated with membrane dope.

Figure 3 represents a coating apparatus for coating the spacer fabric and for forming the membrane.

Figure 4 represents a cross section of a membrane bag in which a volume for permeate collection is fully enclosed by membrane substance, both in a bottom and top plane and along sidewalls.

Figure 5 represents the membrane bag of figure 4 comprising a tube for extraction of permeate inserted through a side wall of the bag.

### Detailed Description of the Invention

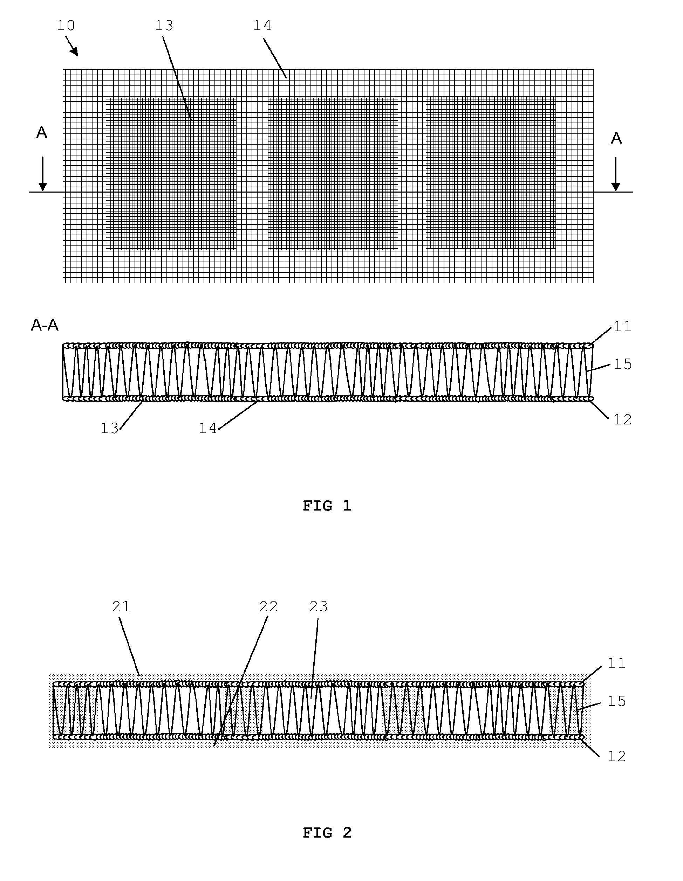

The invention provides a method of manufacturing a membrane bag having an integrated permeate channel. In a first embodiment of the method of the invention, the method comprises a first step of providing a spacer fabric as shown in figure 1. The spacer fabric 10 comprises a first layer 11 and a second layer 12 of a substantially identical fabric. The two layers 11 and 12 are tied together and spaced apart at a preferably constant, predefined distance by a spacer thread 15. The spacer thread 15 is preferably monofilament thread. The spacer thread 15 entangles with the fabric of the two layers 11 and 12 in order to keep the layers apart and hold them together at the specified distance. The spacer thread 15 may form loops through the fabric of the layers 11 and 12. Layers 11 and 12 are preferably planar.

The spacer fabric 10 comprises first regions 13 in which the fabric of the two layers 11 and 12 has a first structure with comparatively small meshes. Each of the first regions 13 is bound all around by a second region 14, in which the fabric of the two layers 11 and 12 has a second structure comprising larger meshes (or holes, openings), larger than the meshes of the first structure. The second region may form a continuous network throughout the fabric. As a result, the two layers 11 and 12 comprise isolated first regions 13, which are contoured by the second region 14. The fabric may be of any kind, i.e. woven or non-woven, and is preferably knit, braided or crocheted.

The spacer thread 15 holds the two layers 11 and 12 together, at the predefined distance, such that the first regions 13 in both layers 11 and 12 face each other, i.e. they are arranged at corresponding positions at both faces 11 and 12 of the fabric. The fabric of the first layer and the fabric of the second layer need not be identical, as long as in the second region(s) each of the fabrics of the two layers has a larger mesh size than in the respective first region(s).

Such a spacer fabric may be manufactured on existing textile machines, such as a Multibar Raschel circular knitting machine (Karl Mayer Textilmaschinenfabrik, Germany). That machine may knit the spacer fabric 10 up to a width of 4 m and up to a length of 100 m. The spacer fabric is knit circularly. Thereafter, it is cut in order to obtain a planar spacer fabric and finally it is wound on a spool. The spacer fabric may also be knit on a flat knitting machine.

The fabric of the layers 11 and 12 is preferably made of multifilament thread. The thread used in the fabric of the layers 11 and 12 may be of the same material as the material of the spacer thread 15. Preferred materials for the fabric thread and/or spacer thread are: polyester (PET), polyamide/nylon (PA), polypropylene (PP), polyethylene (PE), polyphenylene sulfide (PPS), polyetherketone (PEK), polyetheretherketone (PEEK), Ethylene TetraFluoroEthylene (ETFE), MonochloroTriFluoroEthylene (CTFE), all metals (Fe, Cu, Stainless Steel, etc.). The spacer fabric is preferably thermally set and/or the thread may be pre-shrunk, in order to reduce its elasticity.

The spacing distance between the two layers 11 and 12 preferably falls in the range between 0.5 mm and 15 mm, more preferably between 0.5 and 10 mm. The spacer fabric may be formed of a repeating pattern of first regions and second regions. The first regions may have rectangular shape having a size between 200 mm and 4000 mm. Rectangular first regions may be divided by a band of a second region. The interspacing between adjacent first regions (the width of the second region) may be between 10 mm and 100 mm. The first regions may have other geometries as well (e.g. circular, polygonal, etc.).

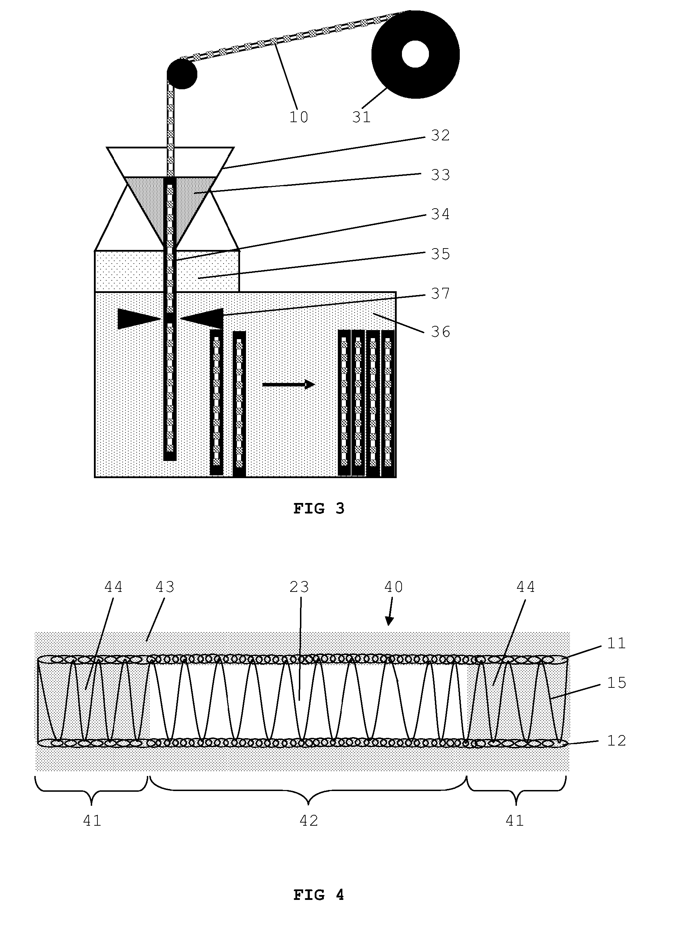

In a following step of the method of the invention, the spacer fabric 10 is coated by a membrane dope. Both layers 11 and 12 of the spacer fabric are coated from the outside. According to the first embodiment, the coating step is performed in a two-sided vertical coating machine as illustrated in figure 3. The coating machine of figure 3 allows simultaneous coating of both sides of the spacer fabric 10. Therefore, the spacer fabric 10 is unwound from a spool 31 and fed to a two-sided coating device 32, which is filled with membrane dope 33.

The membrane dope is a liquid polymeric solution comprising the membrane polymer. Preferred membrane polymers are: polysulphone (PSf), PVC, polyacrylonitrile (PAN), polyester (PES), polyetherketone (PEK), polyetheretherketone (PEEK), polyvinylidene difluoride (PVDF), polyvinyl acetate (PVAc), polyvinyl alcohol (PVA), polyamide (PA), polyvinylpyrrolidone (PVP), PVPP (cross-linked PVP), cellulosics (CA, CTA, ..), polycarbonate block copolymers and mixtures/blends thereof. All rubbers may be used as membrane polymer as well: silicone rubber, Polymethylpentene, Chloroprene, SBR, NBR, Urethane, Hypalon®, Neoprene, Nitrile, Buna, Urethane, Epichlorohydrin, Viton®, EPDM, Butyl, Natural Rubber (Latex), Acrylrubber, Fluorelastomers, Perfluorelastomers, etc.

The coating of both layers 11 and 12 should be such that in the first regions 13, membrane dope is provided at an external side of the fabric and at least partially embeds the fabric of layers 11 and 12. In the first regions 13, the meshes of the fabric of the layers 11 and 12 are filled or closed by membrane dope. In the first regions 13, the penetration of membrane dope into the space between layers 11 and 12 may only be partially. The membrane dope may not close off said space. In the first regions 13, the membrane dope hence impregnates the fabric of the layers 11 and 12. In the first regions the membrane dope embeds a multitude of portions of the fabric of the layers 11 and 12. Thereby, the membrane dope also embeds portions of the spacer thread running through the fabric of layers 11 and 12 (e.g. loops of the spacer thread 15). By at least partially embedding the fabric of layers 11 and 12, a strong bonding may be obtained of the membrane dope to said fabric in the first regions in layers 11 and 12.

The fabric in the second regions 14 comprises larger meshes (or openings, holes) than in the first regions which must allow the membrane dope to enter the spacer fabric and completely fill up the spacer fabric in the second regions. The filling up of the spacer fabric in the second regions is preferably performed from both sides (i.e. both layers 11 and 12). Based on the mesh size of the fabric in the second regions, the viscosity of the membrane dope may have to be adapted to achieve complete filling at desired coating speeds.

As a result of the coating step, a coated spacer fabric 34 is obtained, in which both the layers 11 and 12 are coated with membrane dope to form layers 21 and 22 respectively and in which, in the second regions, the membrane dope completely embeds the spacer fabric. Hence, a coated spacer fabric is obtained, as illustrated in figure 2, in which the first regions comprise air pockets 23 interposed between the coated layers 21 and 22. The air pockets 23 are completely isolated from the outer ambient by membrane dope which fills the second region along the border of the first regions.

A following step comprises membrane formation. A membrane substance is formed from the membrane dope. The membrane dope may be coagulated by contacting the coated spacer fabric with the vapour 35 of a coagulating medium and/or with the coagulating medium 36 itself, which usually is provided in a liquid state (wet phase inversion). The coagulating medium contacts the membrane dope at the external side of the spacer fabric, but does not penetrate into the air pockets 23. Hence, in the first regions, membrane layers may be obtained with asymmetric pore size distribution and with the smallest pores at the outer side. Membrane formation is initiated from the outside. Membrane formation is not initiated from the inside. According to an alternative embodiment, membrane formation is performed by evaporation of the solvent (dry phase inversion). The membrane dope may comprise two solvents. In that case, first the solvent having the lower boiling point is evaporated and a membrane substance is formed. The solvent with the higher boiling point is trapped in the pores of the membrane substance and is evaporated afterwards.

According to a further embodiment, after or during membrane formation, the spacer fabric is cut in and along the second region(s), e.g. by knives 37. As a result, single first regions, or groups of first regions are obtained, which are collected and form membrane bags. By continuously coating a spacer fabric having a pattern of first and second regions, membrane bags may be easily produced at low cost.

As a result, the method of the invention allows to obtain membrane bags as illustrated in figure 4. Figure 4 depicts a cross section of a membrane bag 40 comprising an enclosed volume 23. Volume 23 is fully enclosed by membrane substance 43. The second regions 41 may be cut off from the membrane bag to obtain integrated permeate channel membranes 42 as known in the art. However, it is more useful to keep the membrane bag 40 as such and use it as a membrane cartridge (filtration element). The enclosed volume 23 may serve as a permeate channel. In order to collect the permeate, a tube may be inserted through the bag. The tube may be provided after manufacturing of the bag.

According to a second embodiment of the method, a tube for extraction of permeate out of the enclosed volume 23 is inserted in the spacer fabric during the manufacturing of the spacer fabric. The coating step allows to obtain a membrane bag with integrated permeate collector tube.

The present invention also provides a membrane bag, which is a closed bag made of membrane substance (membrane material). The membrane bag of the invention may be used in filtration devices for permeate production. The membrane bag has preferably planar faces.

According to an embodiment, illustrated in figure 4, a membrane bag 40 is provided, comprising a volume 23, enclosed in membrane substance 43. The volume 23 has dimensions such as to be suitable for permeate collection. The enclosed volume 23 therefore may be regarded as a permeate channel.

The membrane bag 40 comprises a spacer fabric comprising a first layer 11 and a second layer 12 which are tied together and spaced apart at a preferably constant, predefined distance by a spacer thread 15, preferably monofilament thread. The volume 23 is located within the spacer fabric, interposed between layers 11 and 12. Both the first layer 11 and the second layer 12 are made of a fabric comprising meshes and are coated with a membrane substance 43. The membrane substance 43 is linked at a multitude of points to the first layer 11 and the second layer 12. Said multitude of points are spread over the entire surface of the membrane bag. The membrane substance 43 at least partially embeds the first and the second layers so as to fill and/or close the meshes of the fabric of the first and the second layer. The membrane substance may also embed portions of the spacer thread, where those portions engage with the first or the second layer. The first layer 11 and/or the second layer 12 may be fully embedded in membrane substance.

Along the border 41 of the membrane bag 40, the spacer fabric is completely filled - also at the inner side 44 - with membrane substance. As a result, volume 23 is completely enclosed and isolated from the ambient by membrane substance. Membrane substance 43 is provided all around the volume 23, both on the first layer 11 and the second layer 12 between which volume 23 is interposed, and also along the edge 44 of the bag in between the two layers 11 and 12. In the present embodiment, the fabric of the first layer 11 and of the second layer 12 in a first, central region 42 comprises smaller meshes than in a second, border region 41. The first region 42 extends over the enclosed volume 23, wherein the spacer fabric is not filled with membrane substance. In the second region 41, the spacer fabric is completely filled with membrane substance.

The membrane bag 40 is seamless, i.e. the membrane substance is formed as a whole, without lamination, pressing or adhering different membrane layers on top of each other. As a result, the membrane substance of membrane bag 40 is porous all over in all directions.

Membrane bag 40 may have a prismatic shape, with e.g. a rectangular base, although other shapes are equally possible (e.g. cylindrical). The enclosed volume 23 may also have a prismatic shape, with rectangular base 42 and side walls 44, the height of which are defined by the spacing between the first layer 11 and the second layer 12 of the spacer fabric. The first layer 11 and the second layer 12 are preferably planar.

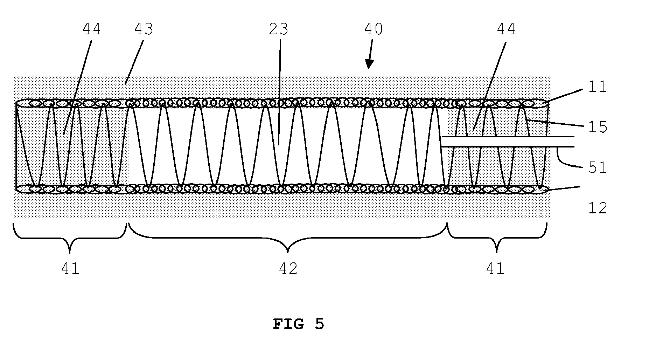

In order to be used as a filtration element (e.g. a membrane cartridge), the membrane bag 40 may be provided with a tube for extracting the permeate from the enclosed volume 23. As illustrated in figure 5, a tube 51 may be inserted through a side wall 44 of the bag.

The membrane bag 40 may be used as a frameless membrane cartridge. It may otherwise also be provided with a frame, along the border of the membrane bag 40. The membrane bag may be manufactured by the method of the invention.

The membrane bags of the invention may be used as filtration elements for microfiltration, ultrafiltration, nanofiltration, reverse osmosis, membrane distillation, pervaporation, gas separation, for immobilizing biological active species, such as enzyme membrane reactors or biofilm reactors, in membrane contactors: supported liquid membranes, perstraction, water degassing, aeration, humidification (vapour permeation), controlled release, in air conditioning: gas/air cleaning, etc.

## Claims

1. A method of manufacturing a membrane bag, the method comprising the steps of:
- providing a spacer fabric (10) comprising a first (11) and a second (12) layer of fabric, wherein the first and the second layers are spaced apart and tied together at a predefined distance by monofilament thread (15) and wherein the spacer fabric comprises one or more first regions (13) in which the fabric of the first layer and the fabric of the second layer have a first structure, and one or more second regions (14) in which the fabric of the first layer and the fabric of the second layer have a second structure having larger meshes than the first structure, and wherein each of said one or more first regions are delimited fully around by the one or more second regions,
- coating the first and the second layer with a membrane dope (33) wherein, in the one or more first regions, the dope at least partially embeds the first layer and the second layer and leaves a space (23) between the first layer and the second layer free from membrane dope and wherein, in the one or more second regions, the dope fills the spacer fabric and
- forming the membrane (35, 36).

2. The method according to claim 1, wherein the step of providing the fabric comprises inserting a tube in the spacer fabric in between a first region and a second region.

3. The method according to any one of the preceding claims, wherein the second structure comprises meshes having a size in the range between 1 and 10 mm.

4. The method according to any one of the preceding claims, further comprising the step of cutting (37) the spacer fabric in and along the second region.

5. A membrane bag, comprising a volume (23) for permeate collection, **characterised in that** said volume is completely enclosed in membrane substance (43).

6. The membrane bag according to claim 5, wherein the membrane substance is seamless.

7. The membrane bag according to claim 5 or 6, comprising a spacer fabric (10), the spacer fabric comprising a first (11) and a second (12) layer of fabric, wherein:
- the first and the second layers are spaced apart and tied together at a predefined distance by monofilament thread (15),
- said first and second layers are coated with said membrane substance,
- the volume for permeate collection is interposed between said first and second layers, and
- membrane substance fills the spacer fabric along the border of the membrane bag.

8. The membrane bag according to claim 7, wherein in the region of the volume for permeate collection, the fabrics of the first and the second layer are at least partially embedded in membrane substance and wherein said membrane substance embeds portions of said monofilament thread.

9. The membrane bag according to any one of the claims 5 to 8, wherein the faces of the membrane bag are planar.

10. The membrane bag according to any one of the claims 5 to 9, comprising a tube (51) for extracting permeate from said volume (23).
